# EUROPEAN PATENT SPECIFICATION

(11) **EP 2 206 178 B1**
(45) Date of publication and mention of the grant of the patent: **05.12.2012**
(21) Application number: 08807268.1
(22) Date of filing: 08.08.2008
(51) Int. Cl.: H01M 2/16

(54) **A SPACING ELEMENT FOR LEAD GEL BATTERIES OR FOR LEAD-ACID BATTERIES**
DISTANZSTÜCK FÜR BLEI-GEL-BATTERIEN ODER BLEI-SÄURE-BATTERIEN
ÉLÉMENTS D'ESPACEMENT POUR BATTERIES PLOMB-GEL OU POUR BATTERIES ACIDE-PLOMB

(30) Priority: 24.10.2007 IT PD20070356
(43) Date of publication of application: 14.07.2010
(73) Proprietor: O.R.V. Ovattificio Resinatura Valpadana S.p.a., 35010 Grantorto (Padova) (IT)
(72) Inventor: MENTI, Silvano, I-36050 Monteviale, Vicenza (IT); CASTAGNA, Luigi, I-36070 Castelgomberto, Vicenza (IT)
(74) Representative: Mitola, Marco
(86) International application number: PCT/IB2008/053184
(87) International publication number: WO 2009/053862

(56) References cited:
- EP-A- 1 724 395
- US-A1- 2002 192 562
- US-A1- 2003 180 622
- US-A1- 2006 068 294

## Description

Field of the invention

The present invention relates to a spacing element for lead gel batteries or lead-acid batteries.

Prior art

As known, in lead gel batteries the electrolyte (diluted sulfuric acid) is gelled by means of silica components. This procedure is used to avoid possible leakage of sulfuric acid and to make the batteries airtight. Gasses created during the electrochemical reactions are absorbed by the gelled electrolyte. This procedure allows the components to combine again.

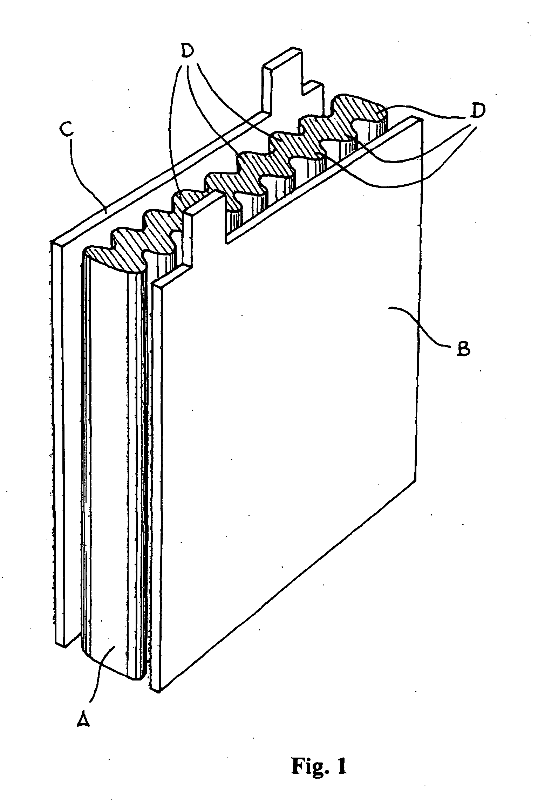

In this type of battery, between the two electrodes (positive and negative) of each electrochemical pair a separating element is interposed, constituted essentially by a sheet shaped element in plastic material, for example PVC, rubber or poliethylene, suitable to electrically isolate the electrodes. The attached figure 1 shows the separating element (A), the positive electrode, (B) and the negative electrode (C).

Usually, the negative electrode C is made of a sponge lead plate (Pb). The positive electrode B can be either of flat type (in this case, it is made of lead dioxide (PbO₂) with a metal lead screen as support) or of tubular type (not shown in the attached figures), i.e. made with a sheath defining a series of tubular elements, inside where there are the terminals of the positive electrode and the active substance (lead dioxide).

The assembly of two electrodes with inverse polarity and a separator interposed between them forms the elementary electrochemical pair. The overlapping of several electrochemical pairs (the number of the pairs determines the capacity of the cell) forms the elementary cell of a battery.

The electrolyte (gelled sulfuric acid) that ensures the electrical continuity and allows the creation of a current flow is placed between the separator A and each electrode (positive B and negative C). When it is placed, the gel is liquid, but soon it takes a semisolid consistency that allows the gel to support itself between the separator and the electrodes.

The separator A has on both sides (facing the electrodes) a rib structure D that allows the penetration of the gelled electrolyte which can contact the entire plate.

It is described wherein the working cycle of a gelled battery.

Oxygen is developed near the positive electrodes due to the chemical decomposition of water:

H₂O → ½ O₂ + 2H+ + 2e-

Oxygen spreads through the gelled electrolyte and migrates to the negative electrodes where it reacts with the sponge lead:

Pb + ½ O₂ → PbO

On the negative electrodes, lead dioxide reacts with the lead-acid electrolyte, forming a water-lead sulfate.

PbO + H₂SO₄ → PbSO₄ + H₂O

The charging process changes the lead sulfate into lead and sulfuric acid, thus completing the recombination cycle.

PbSO₄ + 2 H+ + 2 e⁻ → Pb + H₂SO₄

The battery/cell complete cycle is as follows:

PbO₂ + 2 H₂SO₄ + Pb ↔ 2 PbSO₄ + 2 H₂O

where, on the left there is the status of the charged battery and, on the right, the status of the discharged battery.

During the cyclical phases of charging and discharging of the battery, electrodes experience volume changes caused by temperature changes and electrochemical reactions.

Because of the continuous volume changes, the gelled electrolyte becomes more and more "rigid" through time, and looses the ability to keep a contact with the electrodes, jeopardizing the battery's usefulness.

To solve or - at least - to diminish this problem, a fiberglass mat was placed between the plastic separator with the purpose to support the gelled gel. The results, though, were not satisfactory.

Furthermore, the use of a glass wool mat made the mounting of single cells more difficult. The presence of substances that can be toxic if inhaled, for example fiberglass and/or asbestos, forced the operators to use special safety precautions.

As known, differently from gel batteries, in lead-acid batteries the electrolyte is made of sulfuric acid diluted in water.

In this type of batteries, the electrodes are made of flat sheet shaped elements. Negative electrodes are made of sponge lead (Pb), while positive electrodes are made of lead dioxide (Pb02) with a metal lead screen as support. Batteries may have also positive electrodes of tubular type, similar to those described above for gel batteries.

Between the two electrodes (positive and negative) of each electrochemical pair a separator is interposed, essentially made of a sheet shaped element in plastic material, for example PVC, rubber, or poliethylene, suitable to electrically isolate the electrodes.

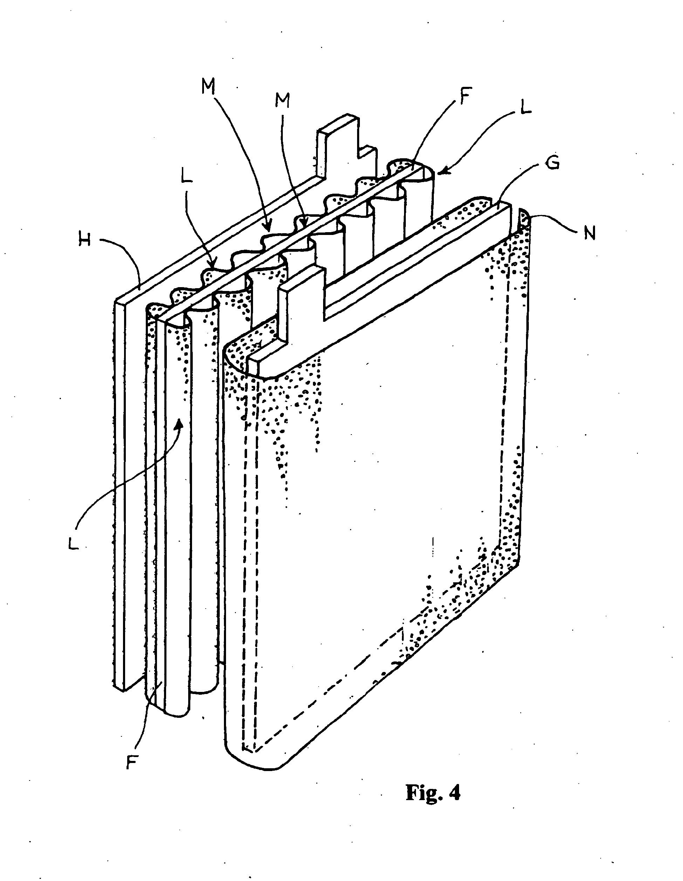

Figure 4 shows an elementary cell of a lead-acid battery, with the separator F, positive electrode G and negative electrode H.

The assembly made of two electrodes with inverse polarity and of a separator interposed therebetween forms a elementary electrochemical pair. The overlapping of several electrochemical pairs (the number of the pairs determines the capacity of the cell) forms the elementary cell of a battery. The pairs are immersed in the electrolyte solution (diluted sulfuric acid), that allows the electrical continuity and, thus, the creation of a current flow.

To improve the circulation of acid and the electric contact, to the separator F (on the both sides facing the electrodes) spacing elements L are associated, which are made of perforated, corrugated elements in a plastic material, such as PVC.

Usually, at contact with the positive electrode G constituted by a flat plate, is placed on a glass wool mat N able to contain the active mass on the electrode itself. The mat N can wrap the electrode on both sides, as shown in Figure 4.

Because of the complex structure of the separator-spacing element, the manufacturing of the lead-acid battery is difficult.

Moreover, the presence of the glass wool mat N forces the personnel to adopt specific safety measures to reduce the risk of contact or inhalation of toxic substances, such as fiberglass and/or asbestos.

Moreover, it has been noticed that due to the sequence of charging and discharging processes, the electrolyte solutions has a tendency to stratify, loosing homogeneity in terms of concentration of sulfuric acid. It may happen that between the upper and the lower layers of the electrolyte's volume, there is a difference up to 4 - 5 % in weight of sulfuric acid. This phenomenon negatively affects the life cycle of the battery.

Summary of the invention

Purpose of the present invention is to eliminate the inconveniences of the above cited prior art providing a spacing element for lead gel batteries that allows a prolonged battery life and efficiency, keeping an innermost contact between the gel electrolyte and the electrodes.

A further purpose of the present invention is to provide a spacing element for lead gel batteries that is also cheap to manufacture.

A further purpose of the present invention is to provide a spacing element for lead-acid batteries that allows for easier manufacturing of the batteries themselves.

A further purpose of the present invention is to provide a spacing element available for lead-acid batteries that does not oblige the personnel to adopt safety measures to limit the risk of contact or inhalation of toxic substances.

A further purpose of the present invention is to provide a spacing element available for lead-acid batteries that keeps the electrolyte solution more homogeneous in terms of concentration of sulfuric acid during the battery life.

Brief description of the drawings

The technical' features, of the invention according to the purposes mentioned above are clearly specified in the appended claims. The advantages of the invention will be more evident in the following detailed description, made with reference to the annexed drawings which represent an embodiment of the invention purely by way of example and in no way limitative, in which:

- Figure 1 shows a schematic view of an elementary electrochemical pair of a gel battery with a traditional separator-spacing element;

Figure 2 shows a schematic view of an electrochemical pair of a gel battery or acid-lead battery with a spacing element made according to a first embodiment of the invention;

- Figure 3 shows a schematic view of an electrochemical pair of a gel battery or lead-acid battery with the spacing element made according to a second embodiment of the invention;

- Figure 4 shows a schematic view of a traditional lead-acid battery;

- Figures 5 and 6 show two photos with different enlargements of a section of the spacing element according to the invention;

- Figure 7 shows a schematic drawing of a crimped fiber; and

- Figure 8 shows a schematic view of the structure of a non-woven fabric used to manufacture a spacing element according to the invention.

Detailed description

With regard to the attached drawings, numeral reference 1 shows a spacing element according to the invention that can be used both in the lead gel batteries and in lead-acid batteries. The positive electrode has been indicated with numeral reference 2, while 3 indicates the negative electrode.

In both cases, the spacing element 1 is suitable for being associated with a separating element placed between the two electrodes of inverse polarity. In the attached figures, the separating element is indicated with 4.

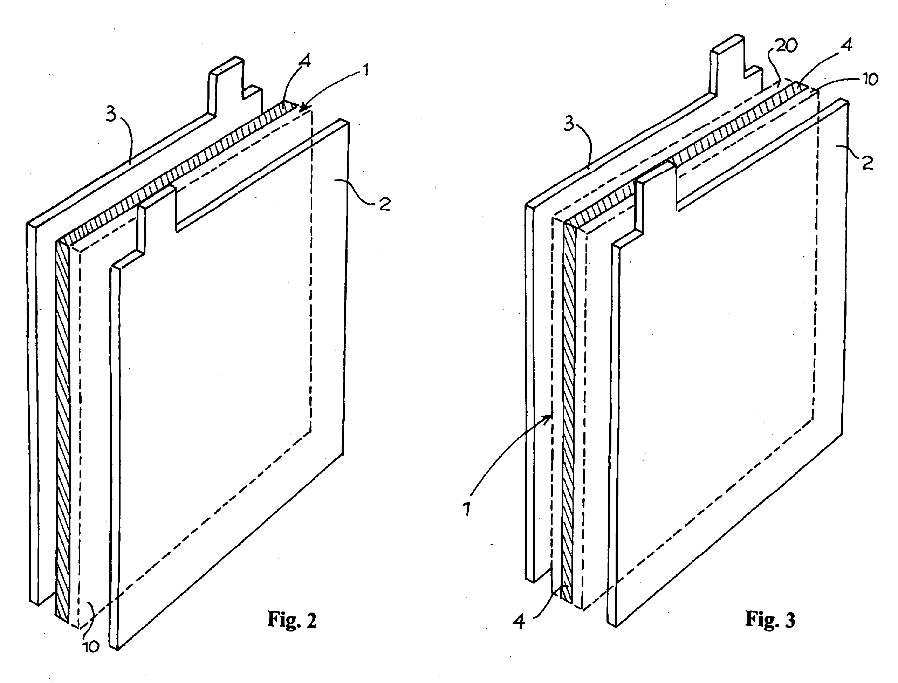

According to a first embodiment shown in Figure 2, the spacing element 1 according to the invention comprises one layer 10 of non-woven fabric that is destined to be associated with the side of the separating element 4 facing the positive electrode 2.

According to an alternative embodiment shown in Figure 3, the spacing element 1 comprises two layers 10 and 20 of non-woven fabric. A first layer 10 is destined to be associated with the side of the separating element 4 facing the positive electrode 2; the second layer 20 is destined to be associated with the opposite side of the separating element 4, which is the one facing the negative electrode 3.

The separating element 4 is made essentially of a sheet shaped element in plastic material, such as PVC, rubber or polyethylene, suitable to insulate the electrodes electrically.

Advantageously, the spacing element 1 is connected to the separating element 4 by welding the single layer 10 or the two layers 10, 20 by heat welding, ultrasonic welding, punching, and /or gluing.

Preferably, the connection between spacing element 1 and separator 4 is made at points along with all the techniques mentioned above.

In case of use with gel batteries, the separator associated with the spacing element 1 according to the invention may also have a surface rib structure.

Advantageously, as better described hereinafter, the presence of the spacing element 1 according to the invention makes useless the said rib structure, and thus it is possible to provide a less expensive flat sheet shaped separator.

The spacing element according to the invention allows a range of advantages that may be found in gel batteries and lead-acid batteries.

At the experimental stage, it was noticed that the spacing element according to the invention keeps its elasticity steady through time. All this allows the spacing element according to the invention to perform more efficiently and effectively than the traditional solutions adopted. In particular, in gel batteries, it is possible to obtain through time an innermost contact between gel electrolyte and electrodes.

Moreover, at the experimental stage, it was noticed that the spacing element 1 according to the invention was able to absorb the gasses that favor the gas recombination cycle and make the battery function more efficiently.

From a functional standpoint, it was noticed that it is not necessary to compress the spacing element 1 between its plates or to apply a compression to the piled cells. The elasticity and resilience characteristics of the spacing element allow the spacing element to follow the movements of the plates during the charging and discharging cycles in an average service life of a battery. The non-compression feature makes the assembling of the batteries easier and less cost-effective.

Yet, it is still possible to compress the assembly; in such case, the spacing element may be compressed up to about half of its original thickness. The compression of the assembly should not be greater than 5kPa.

Thanks to the fact that the spacing element according to the invention does not contain substances that may be toxic to touch or inhale (such as, for example, fiberglass, and/or asbestos), its use improves the safety conditions of the personnel assembling each cell. The fact that specific precautions are not required to be taken during the handling makes the assembly of the spacing elements easier and more cost-effective.

From a functional standpoint, in gel batteries the spacing element 1 according to the invention is destined to keep the separator at distance from the electrodes, a function that is usually performed by the rib structures located on the sides of the plastic separating elements.

The spacing element according to the invention serves also as a support for the gel acid. As already mentioned above, thanks to its elastic characteristics, the spacing element 1 is able to follow the "movements" of the electrodes during the charging and discharging cycles. This way, the spacing element is able to keep the gel electrolyte in an innermost contact with the electrodes during the charging and discharging cycles of the battery, avoiding a possible detachment of electrolyte from the electrodes through time.

At the experimental stage, it was noticed that the spacing element according to the invention is able to keep its dimension and thickness through time. With specific regard to the gel batteries, the spacing element 1 compresses when the active substance expands due to chemical transformations, and, subsequently, when the active substance shrinks, the spacing element expands returning to its original dimension, thus following the shrinking and expansion movement of the active substance, the so-called "breathing". This way, the spacing element according to the invention keeps a constant and innermost contact with the active substance of the positive and negative electrodes. This pattern allows the increase of the cyclical life of lead batteries.

On the contrary, at the experimental stage, it was noticed that a traditional fiberglass mat, once compressed, has a tendency to keep the compressed shape and does not go back to its original dimension, losing eventually the innermost contact with the active substance.

From a functional standpoint, in the lead-acid batteries the spacing element 1 according to the invention is meant to replace the traditional perforated, corrugated spacing elements and/or the glass wool mat that wraps the positive electrode.

As mentioned above, also in the lead-acid batteries the spacing element 1 according to the invention, thanks to its elasticity and resilience characteristics, allows it to follow the movements of the electrodes during the charging and discharging cycles.

This way, in particular in lead-acid batteries, it is possible to obtain excellent retention of the active substance. An eventual loss of consistency is avoided by keeping the active substance constantly pressed on the electrode.

Either when the spacing element 1 is used in gel batteries and when it is used in lead-acid batteries, the layer of non-woven fabric is destined to absorb the electrolyte. In the first case, the electrolyte is gel, while in the second case, it is liquid (or better, it is in an aqueous solution).

In case of use in gel batteries, the porous structure of the non-woven fabric that form the spacing element represents a support and grip structure for the gel electrolyte. Advantageously, thanks to the presence of the spacing element 1, the gel electrolyte may spread homogenously throughout the surface of the electrodes besides remaining in innermost contact with the active substance.

In case of use in lead-acid batteries, the porous structure of the non-woven fabric that forms the spacing element 1 on one hand allows electrical continuity throughout the volume of the electrolyte, and on the other hand prevents the sulfuric acid from stratifying. Thus, thanks to the spacing element 1, the electrolyte solution is able to keep a good homogeneity in terms of concentration of the sulfuric acid throughout the volume of the battery during service life of battery.

According to the invention, the spacing element 1 comprises at least one layer 10, 20 of non-woven fabric made with one or more fibers of organic polymers.

With the expression "organic polymers", we refer especially to those polymers classifiable as plastic substances.

Advantageously, the organic polymers mentioned above are chosen among acid-resistant materials. Preferably but not necessarily, the organic polymers mentioned above are polyesters and/or polypropylene.

The spacing element 1 may be built with either one type of polymer fibers and mixtures of fibers of two or more different polymers. As detailed hereinafter, it is also possible to use bicomponent fibers, preferably but not necessary, polyester.

According to a preferred embodiment of the invention, the spacing element 1 is made starting only from polyester and/or polyester blended fibers.

As already mentioned above, the use of the spacing element according to the invention does not require the battery-assembly personnel to adopt specific safety measures, since there is no risk of contact or inhalation of toxic substances, such as fiberglass and/or asbestos. All this, along with the simplified structure of the separator-spacing element unit, makes the manufacturing of the batteries easier, especially when it comes to lead-acid batteries.

Advantageously, the non-woven fabric that forms the separator may be performed using any of the known manufacturing techniques, for example, carding associated with interlacing; the interlacing can be needle lace (also called "needle punched") with or without resin application, water-jet lace (called "spunlace") or high-pressure steam jet lace (called "steamlace"). Alternatively, the "meltblow" technique or the "spunbond" techniques may also be used.

According to a preferred embodiment, the manufacturing process of the non-woven fabric that forms the spacing element 1 comprises the following main operative phases:

- carding of fibers to obtain fiber plies,

- layering of the fiber plies obtained from carding to make a layered mat;

- mechanical lacing of the carded fiber plies layered to form the mat;

- solidarization of the fibers.

Along with the manufacturing process mentioned above, the realization of the non-woven fabric with staple fibers was very advantageous. The non-woven fabric showed very marked elasticity/resilience characteristics.

With "staple fibers", it is usually intended that fibers be cut in small "scraps" (or short fibers), randomly located and thus without a particular or preferred pattern.

In this case, referring to the fact that the non-woven fabric is made of staple fibers, it cannot be excluded that the fibers of the finished non-woven fabric may have a particular or preferred pattern.

A preferred manufacturing process is based on the combination of the "needle punched" technique (i.e. needling) and the solidarization of the fibers through thermo-bonding (also known as "thermal bonding").

Preferably, the needling phase is performed with the following working parameters: 20 to 60 needle punching point/cm²; 400 to 600 needle punching strikes /min. Parameters depend on the basis weight desired for the finished non-woven fabric.

The thermal bonding phase is provided placing the non-woven fabric in an oven with temperatures ranging between 170°C to 210°C, variable (as stated hereinafter) according to the polymeric substance that forms the fibers used.

On the whole, the average speed of the manufacturing product (fibers, staples, mat) when it undergoes the stations of carding, layering, needle punching and thermal bonding ranges preferably between 13 and 17 m/min, according to the basis weight desired for the finished non-woven fabric.

Preferably, the solidarization by thermal bonding of the non-woven fabric fibers is made possible using thermo-bonding (or thermoforming) fibers.

As detailed hereinafter, thermo-bonding fibers are mixed with the fibers that will be the prevailing part of the non-woven fabric and form its main structure. Thermo-bonding (or thermoforming) fibers are chosen according to their softening and melting temperature that should be lower than the one provided by other fibers of the mixture.

More in detail, thermo-bonding (or thermoforming) fibers can be, for example, in polypropylene, assuming that for example the rest of the fibers are in high-melting polyester (for example, about 260°C).

Preferably, bicomponent fibers are used as thermo-bonding fibers, preferably the polyester type, for example having polyester sheath with melting point ranging between 110°C and 160°C, assuming that the rest of the fibers are in high-melting polyester (for example, about 260°C).

With the term "bicomponent fiber", it is usually intended for fibers made of at least two types of polymers with different melting points.

Preferably, but not necessarily, bicomponent fibers made of two polymers coaxially extruded should be used. Where the high melting polymer is placed in the center and the low melting polymer is placed outside.

The arrangement of the two polymers in the filiform structure of the fiber should not be intended as restrictive. In fact, advantageously, it is also possible to use bicomponent fibers with a non-coaxial distribution of the two polymers. For example, it is possible to use bicomponent fibers in which portions of one polymer are alternated lengthwise to portions of the other polymer.

In accordance with alternative manufacturing solutions, the solidarization of the fibers can be achieved through a resin bonding phase, along with or in alternative to the thermal bonding phase.

With "resin bonding", it is meant the application of binding resins to the non-woven fabric. Binding resins can be, for example, styrol-butadiene resins and/or acrylic resins.

As mentioned above, binding resins may be used in alternative to or along with thermal bonding fibers.

In accordance with a preferred embodiment, each layer of the spacing element is made of a non-woven fabric, in which 20% to 80% of the weight of fiber content is made of fibers with a 17 dTex to 100 dTex count.

In accordance with a particularly preferred embodiment, each layer of the spacing element is made of a non-woven fabric, in which 60% to 80% of the weight of fiber content is made of fibers with a 17 dTex to 100 dTex count.

Within the count range of 17 dTex to 100dTex, the sub-range comprised between 17 dTex to 40 dTex is particularly preferred.

Advantageously, in both embodiments mentioned above the residual percentage of the fiber content is made of fibers having count comprised between 2.2 dTex and 10 dTex .

Preferably, according to the two embodiments mentioned above, fibers with a greater count are made of high melting polyester, while fibers with a lower count are made of thermo-bonding fibers.

Advantageously, thermo-bonding or thermoforming fiber are bicomponent (preferably in polyester) or in polypropylene. However, other materials' combination can be expected beside the one just described.

The presence of high count fibers, according to the terms mentioned above, allows the realization of an open structure in which the acid (gel or liquid) can penetrate with ease.

As mentioned above, this is particularly important in gel batteries because the structure of the non-woven fabric of the spacing element 1 represents a sort of scaffolding or supporting framework for the gel electrolyte that allows a more even distribution on the electrodes themselves besides keeping it in an innermost contact with the electrodes.

The presence of high count fibers, according to the terms described above, allows also the realization of a structure with high elasticity that allow the spacing element to keep an innermost contact with the electrodes during the charging and discharging cycles of the batteries.

In accordance with a particularly preferred embodiment, the weight of the non-woven fabric is 75% made of fibers (preferably high melting polyester, for example at 260°c) with a count equal to about 38 dTex, the remaining being made of fibers (preferably polyester bicomponents) with count equal to about 4.4 dTex.

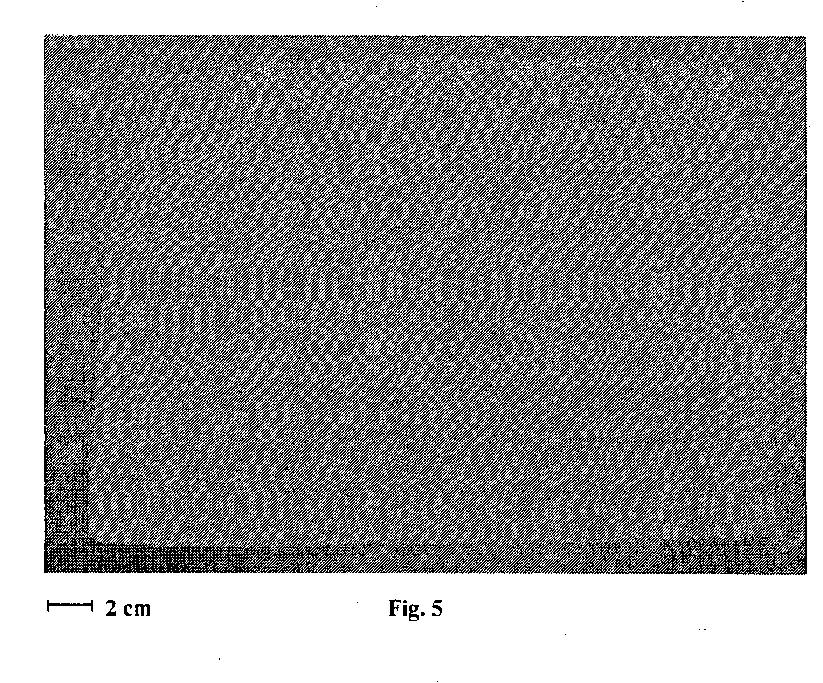

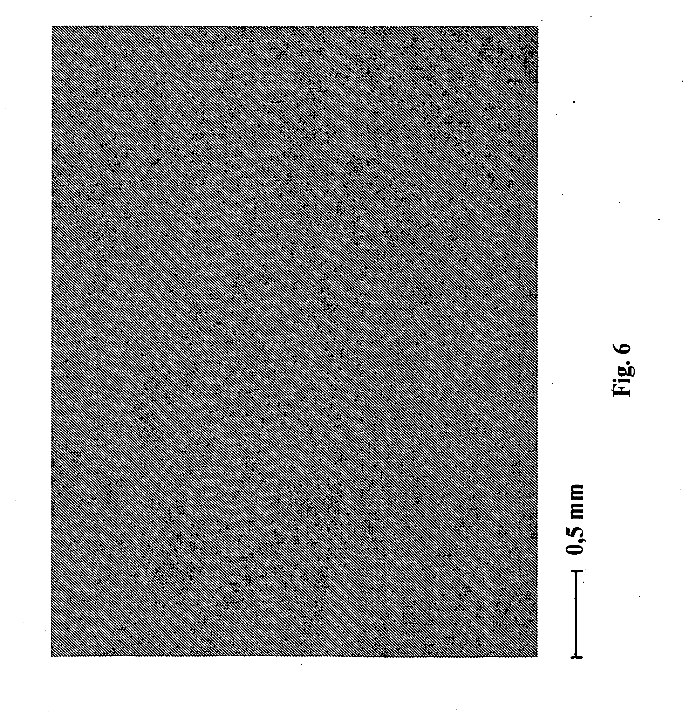

Figures 5 and 6 show two pictures, with different enlargements, of the non-woven fabric made according to the just cited embodiment. In the specific, the non-woven fabric was made with a 90 g/m² basis weight and a 2 mm thickness at 3 kPa.

Pictures 5 and 6 show the open porous structure of the non-woven fabric. In particular, in Figure 6 it is possible to distinguish the fibers (i.e. white filaments) and the hollow spaces (i.e. dark areas).

In accordance with an alternative embodiment, the non-woven fabric can comprise only high count fibers , i.e. fibers with a count ranging between 17 dTex and 100 dTex. In this case, advantageously, fibers can be solidarized using thermal bonding resins. Alternatively, it is possible to use a mixture made of high count thermoforming fibers, such as polyester or polypropylene bicomponents.

The use of thermo-bonding bicomponent fibers was particularly favorable to the realization of a porous structure made of solidarized fibers.

More in detail, after being placed in an oven and being cooled off, the bicomponent fibers form "connecting bridges" between high melting fibers.

This effect is made possible by the sheath-core structure of bicomponent fibers. The core of the fibers made of polymers not sensitive to thermal bonding temperatures ( for example polyester melting at 260°C) ensures the required mechanical consistency to the said "connecting bridges". The sheath made in polymers sensitive to thermal bonding temperatures ( for example polyester melting at a temperature ranging 110° C and 160°C), once softened, and, eventually, melted, ensures the adhesion to the contiguous fibers.

Advantageously, to obtain a porous structure with high elasticity characteristics, crimped fibers are used.

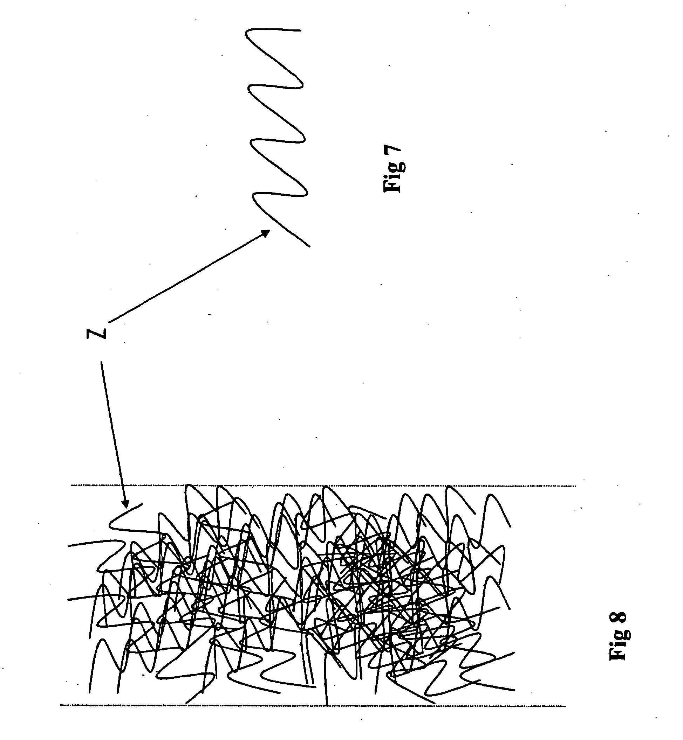

With "crimping", we mean the manufacturing process to give a undulating shape to the fibers. Figure 7 shows schematically and by way of example, the undulating shape of a crimped fiber, indicated with the letter Z.

Preferably, with fibers having a count ranging between 17 dTex and 40 dTex, the crimping or crimped degree (defined as the number of waves per length of each fiber) was chosen in the range between 3 to 6 waves/cm.

Practically, the undulating structure of each fiber confers elasticity to the fibers themselves. Inside the not-woven fabric according to the invention, the fibers solidarized between them work as springs, resisting to the strains of the non-woven fabric. Figure 8 shows schematically and by way of example the structure of the non-woven fabric according to the invention. The letter Z represents each fiber.

Advantageously, the crimping of the fibers, the presence of high count fibers and the bonding effect conferred by the thermo-bonding fibers (and in particular by bicomponent fibers) add synergy to the creation of non-woven fabric with elastic open (porous) structure.

As already mentioned above, thermal bonding phase consists in a thermal treatment of the material (it is placed in a convection oven) at 180-210°C. Thermal bonding temperature depends on the melting temperature of the thermo-bonding fibers (i.e. of the outer sheath of the bicomponent fiber) and high melting fibers.

The thermal bonding phase allows in addition the thermal stabilization of the non-woven fabric. Using the so-called "shape memory" of polymers like polyesters and polyethylene, a polymeric material that was thermally treated at a determined temperature maintains a good dimensional stability does not change its dimension as long as the thermo-stabilization temperature is not exceeded, if it is placed under thermal stress. This helps conferring the non-woven fabric the ability to keep its dimension stable.

Preferably, fibers have a length ranging between 30 and 80 mm.

Advantageously, each layer of the spacing element has a basis weight ranging between 40 g/m² and 200 g/m², and, preferably, between 60 g/m² and 80 g/m², variable in accordance with the characteristics of the battery or storage battery in which the spacing element is used.

The thickness of the spacing element according to the invention may vary in accordance with the type of the fiber used (and therefore the final resilience of the spacer) and the characteristics of the battery.

Preferably, with basis weights ranging 60 g/m² and 80 g/m², the non-woven fabric according to the invention has a thickness ranging between 1.6 mm and 2 mm circa, measured by performing a 3kPa pressure. With basis weights ranging 40 g/m² and 60 g/m², the non-woven fabric has a thickness ranging 1 mm and 1.6 mm circa, while, with basis weights greater than 80 g/m² the non-woven fabric has a thickness greater than 2 mm. For example, with 120 g/m² basis weight, the thickness is about 2.9 mm.

The non-woven fabric according to the invention was tested for determining its elasticity properties.

To this purpose, tests were performed both in accordance with the UNI 10171 Standard on the assessment of the compressibility factor and the delayed elastic recovery, and in accordance with the UNI 10172 Standard on the assessment of the compressibility factor and the delayed elastic recovery after dynamic stress.

More in detail, tests in accordance with the UNI 10171 Standard envisage use of specimens having 40x40 cm dimensions and a 50 mm minimum thickness (obtained by overlapping several specimens). The test consists of: - measurement of the s1 thickness of the specimen under a 20 Pa weight; - measurement of the s2 thickness 5 minutes after adding a 480 Pa extra weight (for a total 500 Pa weight); - measurement of the s3 thickness 5 minutes after removing the 480 Pa weight. (s1-s2)/s1x100 gives the static compressibility, while s3/s1x100 gives the delayed elastic recovery.

The tests in accordance with the UNI 10172 Standard envisage use of specimens having 40x40 cm dimensions and a 50 mm minimum thickness (obtained by overlapping several specimens). The test consists of: - measurement of the s1 thickness of the specimen under a 20 Pa weight; - compress the material for 20,000 cycles with a 550 Pa weight; - measurement of the s4 thickness 5 minutes after adding a 500 Pa weight (20 + 480 Pa);- measurement s5 thickness 5 minutes after removing the 480 Pa weight. (s1-s4)/s1x100 gives the compressibility after dynamic stress, while s5/s1x100 gives the delayed elastic recovery after dynamic stress.

Altogether, the non-woven fabric according to the invention showed an average compressibility greater than 20% and a delayed elastic recovery greater than 95%, considering the different basis weights. After dynamic stress, the average compressibility was greater than 25% and the delayed elastic recovery greater than 93%.

As example, the following are the data referring to tests performed on specimens of non-woven fabric with about 100 g/m² basis weight and thickness at 3kPa thickness of about 2 mm. 75% of the non-woven fabric's weight is made of polyester fibers with melting point at 260°C, count of 38 dTex and crimping degree of 5 waves/cm; the remaining 25% of the non-woven fabric is made of bicomponent fibers with melting point of the sheath at about 160°C and count of 4.4 dTex. The manufacturing process of non-woven fabric involved carding, needle punching, and thermal bonding. Needle punching was performed with 40 points/cm² and 500 strikes/min. Thermal bonding was performed in a convection oven at about 200°C.

Tests performed in accordance with the UNI 10171 Standard showed a 22.4% compressibility and a 96.5% delayed elastic recovery. Tests performed in accordance with the UNI 10172 Standard after dynamic stress showed 24.8% compressibility and a 93.9% delayed elastic recovery.

Compressibility and delayed elastic recovery data show excellent elasticity and resilience characteristics of the spacing element according to the invention.

The invention as described above thus meets the desired purposes.

Obviously, when put into practice, the invention may have forms and shapes that may vary from those explained above while remaining within the present scope of protection.

Moreover, all the details may be replaced by elements, which are technically equivalent, and the dimension, shape, and materials used may vary according to the need.

In accordance with another embodiment, to eliminate the use of fiberglass and simplify the assembly of lead-acid batteries, a two-layer material is provided.

A first layer or side is built with the same fibers, characteristics, and purpose (separation) of the material described above, (mostly, high count staple fibers with excellent resilience, elasticity, and gas absorption capacity). The other side, a second layer, is made with low count fibers, preferably 80% made of 0.8 dtex polyester and the remaining 20% is made of 2.2 dtex bicomponent polyester fibers. The basis weight of this second layer ranges between 20 g/m² to 100 g/m² and has the same purposes of the fiberglass, such as to sustain the PbO2 supported by the Pb grid.

One material thus replaces the fiberglass and the plastic spacing element used in the prior art, especially in lead-acid batteries.

## Claims

1. A spacing element for lead gel batteries with gelled electrolyte or for lead-acid batteries, comprising at least one layer of non-woven fabric made from fibers of one or more organic polymers suitable to absorb said gelled or liquid electrolyte, said layer being suitable for combination with a separating element placed between two electrodes of inverse polarity, wherein 20% to 80% of the weight of the fibers' content is made of fibers with count ranging between 17 dTex and 100 dTex, the remaining percentage of the fiber content being made of fibers with count ranging between a 2.2 dTex and 10 dTex.

2. Spacing element according to claim 1, wherein said at least one layer is suitable to be associated with the side of said separating element facing the positive electrode.

3. Spacing element according to claim 1, comprising two layers of non-woven fabric made of fibers made of one or more organic polymers, one layer of which being suitable for association with one side of said separating element facing the positive electrode and the other layer with the opposite side, which is the one facing the negative electrode.

4. Spacing element according to any one of the previous claims, wherein said organic polymers are polyester and/or polypropylene.

5. Spacing element according to any one of the previous claims, wherein said fibers are 100% made of polyesters.

6. Spacing element according to any one of the previous claims, wherein the manufacturing of said non-woven fabric involves at least one phase of carding of said fibers, one phase through the layering unit and a lacing phase, preferably with needles.

7. Spacing element according to the preceding claim, wherein the manufacturing of said non-woven fabric involves one phase of thermal bonding and/or resin bonding.

8. Spacing element according to any one of the previous claims, wherein said fibers have a crimping degree ranging between 3 and 6 waves/cm.

9. Spacing element according to any one of the previous claims, wherein some of said fibers are made of thermoforming fibers.

10. Spacing element according to the previous claim, wherein said bicomponent fibers are in polyester.

11. Spacing element according to any one of the previous claims, wherein some of said fibers are partly solidarized with bonding resins.

12. Spacing element according to any one of the previous claims, wherein 60% to 80% of the weight of the fibers' content is made of fibers with count ranging between 17 dTex and 100 dTex.

13. Spacing element according to claim 1 or 12, wherein said fibers have count ranging between 17 dTex and 40 dTex.

14. Spacing element according to claim 1, wherein said fibers having count ranging between 2.2 dTex and 10 dTex are bicomponent fibers, preferably in polyester, or otherwise in polypropylene.

15. Spacing element according to any one of the previous claims, wherein 75 % of the fiber's weight of the said non-woven fabric is made of fibers preferably in polyester with about 38 dTex count, the remaining being made of preferably bicomponent polyester fibers with about 4.4 dTex count.

16. Spacing element according to any one of the previous claims, wherein said fibers have length ranging between 30 and 80 mm.

17. Spacing element according to any one of the previous claims, with basis weight ranging substantially between 40 g/m² and 200 g/m², and preferably between 60 g/m² and 80 g/m².

18. Spacing element according to any one of the previous claims, wherein said at least one layer may be compressed between said separating element and one of said electrodes.

19. Spacing element according to the previous claim, wherein said at least one layer may be compressed between said separating element and one of said electrodes up to about half of its thickness.

20. Spacing element according to any one of the previous claims, wherein said at least one layer may be placed between said separating element and one of said electrodes without being compressed.

21. Spacing element according to any one of the previous claim, wherein said at least one layer is connected to said separating element through heat welding, ultrasonic welding, punching, and /or gluing.

22. Separating body for lead batteries with gel electrolyte, to be placed between two electrodes of inverse polarity of an electrochemical pair, comprising one sheet shaped element (4) in plastic material and at least one spacing element (1, 10, 20) according to any one of the previous claims, wherein said spacing element (1) is associated with said sheet shaped element.

23. Lead battery with gelled electrolyte, comprising a plurality of electrochemical cells, each cell comprising a plurality of electrochemical pairs carrying two electrodes of inverse polarity, at least one of said pairs having a spacing element according to any one of claims from 1 to 21.

24. Separator body for lead-acid batteries, to be placed between two electrodes of inverse polarity of an electrochemical pair, comprising one sheet shaped element (4) in plastic material and at least one spacing element (1, 10, 20) according to any one of the claims 1 to 21, wherein said spacing element (1) is associated with said sheet shaped element.

25. Lead-acid battery, comprising a plurality of electrochemical cells, each cell comprising a plurality of electrochemical pairs carrying two electrodes of inverse polarity at least one of said pairs having a spacing element according to any one of claims from 1 to 21.

## Patentansprüche

1. Distanzstück für Blei-Gel-Batterien mit einem vorgelierten Elektrolyten oder für Blei-Säure-Batterien, das wenigstens eine Schicht aus nicht gewebten Fasern bzw. Faservlies umfasst, das aus Fasern aus einem oder mehreren organischen Polymeren gefertigt ist, die geeignet ist, den vorgelierten oder flüssigen Elektrolyten aufzunehmen, wobei die Schicht für die Kombination mit einem Trennelement geeignet ist, das zwischen zwei Elektroden mit umgekehrter Polarität angeordnet ist, wobei 20% bis 80% des Gewichts des Fasergehalts aus Fasern mit einer Feinheit im Bereich zwischen 17 dTex und 100dTex gefertigt sind, wobei der restliche Prozentsatz des Fasergehalts aus Fasern mit einer Feinheit im Bereich zwischen 2,2 dTex und 10 dTex gefertigt ist.

2. Distanzstück nach Anspruch 1, wobei die wenigstens eine Schicht geeignet ist, mit der Seite des Trennelements verbunden zu werden, die der positiven Elektrode zugewandt ist.

3. Distanzstück nach Anspruch 1, das zwei Schichten aus Faservlies umfasst, das aus Fasern gefertigt ist, die aus einem oder mehreren organischen Polymeren bestehen, wobei eine Schicht davon für die Verbindung mit einer Seite des Trennelements, die der positiven Elektrode zugewandt ist, und die andere Schicht mit der entgegengesetzten Seite, welche die ist, die der negativen Elektrode zugewandt ist, geeignet ist.

4. Distanzstück nach einem der vorhergehenden Ansprüche, wobei die organischen Polymere Polyester und/oder Polypropylen sind.

5. Distanzstück nach einem der vorhergehenden Ansprüche, wobei die Fasern zu 100% aus Polyester gefertigt sind.

6. Distanzstück nach einem der vorhergehenden Ansprüche, wobei die Herstellung des Faservlieses wenigstens eine Phase des Kardierens der Fasern, eine Phase durch die Schichtungseinheit und eine Schnürungsphase, vorzugsweise mit Nadeln, umfasst.

7. Distanzstück nach dem vorhergehenden Anspruch, wobei die Herstellung des Faservlieses eine Phase der thermischen Verfestigung bzw. des thermischen Bondens und/oder Kunstharzbindung umfasst.

8. Distanzstück nach einem der vorhergehenden Ansprüche, wobei die Fasern einen Kräuselungsgrad im Bereich zwischen 3 und 4 Wellen/cm haben.

9. Distanzstück nach einem der vorhergehenden Ansprüche, wobei einige der Fasern aus Thermoformfasern gefertigt sind.

10. Distanzstück nach dem vorhergehenden Anspruch, wobei die Zweikomponentenfasern aus Polyester sind.

11. Distanzstück nach einem der vorhergehenden Ansprüche, wobei einige der Fasern teilweise mit Bindeharzen verbunden bzw. verfestigt sind.

12. Distanzstück nach einem der vorhergehenden Ansprüche, wobei 60% bis 80% des Gewichts des Fasergehalts aus Fasern mit einer Feinheit im Bereich zwischen 17 dTex und 100 dTex gefertigt ist.

13. Distanzstück nach Anspruch 1 oder 12, wobei die Fasern eine Feinheit im Bereich zwischen 17 dTex und 40 dTex haben.

14. Distanzstück nach Anspruch 1, wobei die Fasern, die eine Feinheit im Bereich zwischen 2,2 dTex und 10 dTex haben, Zweikomponentenfasern, vorzugsweise aus Polyester oder andernfalls aus Polypropylen, sind.

15. Distanzstück nach einem der vorhergehenden Ansprüche, wobei 75% des Fasergewichts des Faservlieses aus Fasern gefertigt ist, die vorzugsweise eine Feinheit von etwa 38 dTex haben, wobei der Rest vorzugsweise aus Zweikomponentenpolyesterfasern mit einer Feinheit von etwa 4,4 dTex gefertigt ist.

16. Distanzstück nach einem der vorhergehenden Ansprüche, wobei die Fasern eine Länge im Bereich zwischen 30 und 80 mm haben.

17. Distanzstück nach einem der vorhergehenden Ansprüche, wobei das Flächengewicht bzw. das Basisgewicht im Wesentlichen im Bereich zwischen 40 g/m2 und 200 g/m2 und vorzugsweise zwischen 60 g/m2 und 80 g/m2 liegt.

18. Distanzstück nach einem der vorhergehenden Ansprüche, wobei die wenigstens eine Schicht zwischen dem Trennelement und einer der Elektroden komprimiert werden kann.

19. Distanzstück nach dem vorhergehenden Anspruch, wobei die wenigstens eine Schicht zwischen dem Trennelement und einer der Elektroden bis zu etwa der Hälfte ihrer Dicke komprimiert werden kann.

20. Distanzstück nach einem der vorhergehenden Ansprüche, wobei die wenigstens eine Schicht zwischen dem Trennelement und einer der Elektroden angeordnet werden kann, ohne komprimiert zu werden.

21. Distanzstück nach einem der vorhergehenden Ansprüche, wobei die wenigstens eine Schicht durch Wärmeschweißen, Ultraschallschweißen, Stanzen und/oder Leimen mit dem Trennelement verbunden ist.

22. Trennkörper für Bleibatterien mit einem Gelelektrolyten, der zwischen zwei Elektroden mit umgekehrter Polarität eines elektrochemischen Paars angeordnet werden soll, der ein schichtförmiges Element (4) aus Kunststoffmaterial bzw. plastischem Material und wenigstens ein Distanzstück (1, 10, 20) gemäß einem der vorhergehenden Ansprüche umfasst, wobei das Distanzstück (1) mit dem schichtförmigen Element verbunden ist.

23. Bleibatterie mit einem vorgelierten Elektrolyten, die eine Vielzahl elektrochemischer Zellen umfasst, wobei jede Zelle eine Vielzahl elektrochemischer Paare umfasst, die zwei Elektroden mit umgekehrter Polarität aufnehmen, wobei wenigstens eines der Paare ein Distanzstück gemäß einem der Ansprüche 1 bis 21 hat.

24. Trennkörper für Blei-Säure-Batterien, der zwischen zwei Elektroden mit umgekehrter Polarität eines elektrochemischen Paars angeordnet werden soll, der ein schichtförmiges Element (4) aus Kunststoffmaterial bzw. plastischem Material und wenigstens ein Distanzstück (1, 10, 20) gemäß einem der Ansprüche 1 bis 21 umfasst, wobei das Distanzstück (1) mit dem schichtförmigen Element verbunden ist.

25. Blei-Säure-Batterie, die ein Vielzahl elektrochemischer Zellen umfasst, wobei jede Zelle eine Vielzahl elektrochemischer Paare umfasst, die zwei Elektroden mit umgekehrter Polarität aufnehmen, wobei wenigstens eines der Paare ein Distanzstück gemäß einem der Ansprüche 1 bis 21 hat.

## Revendications

1. Élément d'espacement pour piles sèches au plomb à électrolyte gélifié ou pour accumulateurs acides au plomb, comprenant au moins une couche de non-tissé à base de fibres constituées d'un ou de plusieurs polymères organiques capables d'absorber ledit électrolyte gélifié ou liquide, ladite couche pouvant être combinée à un élément de séparation placé entre deux électrodes de polarités inverses, dans lequel 20 à 80 % du poids de la teneur en fibres est constitué de fibres ayant une finesse comprise entre 17 et 100 dTex, le pourcentage restant de la teneur en fibres étant constitué de fibres ayant une finesse entre 2,2 et 10 dTex.

2. Élément d'espacement selon la revendication 1, dans lequel ladite au moins une couche peut être associée au côté dudit élément de sépara-tion faisant face à l'électrode positive.

3. Elément d'espacement selon la revendication 1, comprenant deux couches de non-tissé à base de fibres constituées d'un ou de plusieurs polymères organiques, l'une des couches pouvant être associée au côté dudit élément de sépara-tion faisant face à l'électrode positive et l'autre couche au côté opposé, qui est celui faisant face à l'électrode négative.

4. Élément d'espacement selon l'une quelconque des revendications précédentes, dans lequel les-dits polymères organiques sont le polyester et/ ou le polypropylène.

5. Élément d'espacement selon l'une quelconque des revendications précédentes, dans lequel les-dites fibres sont 100 % polyester.

6. Élément d'espacement selon l'une quelconque des revendications précédentes, dans lequel la fabrication dudit non-tissé implique au moins une phase de cardage desdites fibres, une phase de passage dans l'étaleur-nappeur et une phase de laçage, de préférence avec des aiguilles.

7. Élément d'espacement selon la revendication précédente, dans lequel la fabrication dudit non-tissé implique une phase de liaison ther-mique et/ou de liaison avec une résine.

8. Élément d'espacement selon l'une quelconque des revendications précédentes, dans lequel les-dites fibres ont un degré d'ondulation compris entre 3 et 6 ondulations/cm.

9. Élément d'espacement selon l'une quelconque des revendications précédentes, dans lequel cer-taines desdites fibres sont constituées de fibres thermoformées.

10. Élément d'espacement selon la revendication précédente, dans lequel lesdites fibres bicompo-sées sont en polyester.

11. Élément d'espacement selon l'une quelconque des revendications précédentes, dans lequel cer-taines desdites fibres sont partiellement soli-darisées avec des résines liantes.

12. Élément d'espacement selon l'une quelconque des revendications précédentes, dans lequel 60 à 80 % du poids de la teneur en fibres est cons-titué de fibres ayant une finesse comprise entre 17 et 100 dTex.

13. Élément d'espacement selon les revendica-tions 1 ou 12, dans lequel lesdites fibres ont une finesse entre 17 et 40 dTex.

14. Élément d'espacement selon la revendication 1, dans lequel lesdites fibres ayant une finesse comprise entre 2,2 et 10 dTex sont des fibres bicomposées, de préférence en polyester, ou sinon, en polypropylène.

15. Élément d'espacement selon l'une quelconque des revendications précédentes, dans lequel 75 % du poids de la teneur en fibres dudit non-tissé est constitué de fibres de préférence en poly-ester ayant une finesse d'environ 38 dTex, le reste étant constitué de préférence de fibres en polyester bicomposées ayant une finesse d'envi-ron 4,4 dTx.

16. Élément d'espacement selon l'une quelconque des revendications précédentes, dans lequel lesdites fibres ont une longueur comprise entre 30 et 80 mm.

17. Élément d'espacement selon l'une quelconque des revendications précédentes, ayant un gram-mage de base essentiellement compris entre 40 et 200 g/m2, et de préférence entre 60 et 80 g/m2.

18. Élément d'espacement selon l'une quelconque des revendications précédentes, dans lequel ladite au moins couche peut être comprimée entre ledit élément de séparation et l'une desdites électrodes.

19. Élément d'espacement selon la revendication précédente, dans lequel ladite au moins couche peut être comprimée entre ledit élément de sépa-ration et l'une desdites électrodes jusqu'à environ la moitié de son épaisseur.

20. Élément d'espacement selon l'une quelconque des revendications précédentes, dans lequel ladite au moins couche peut être placée entre ledit élément de séparation et l'une desdites élec-trodes sans être comprimée.

21. Élément d'espacement selon l'une quelconque des revendications précédentes, dans lequel ladite au moins couche est jointe audit élément de séparation par thermosoudage, soudage par ultrasons, poinçonnage et/ou collage.

22. Corps formant séparation pour batteries au plomb et électrolyte de type gel, qui se place entre deux électrodes de polarité inverse d'une paire électrochimique, comprenant un élément en forme de feuille (4) en matière plastique et au moins un élément d'espacement (1, 10, 20) selon l'une quelconque des revendications précédentes, ledit élément d'espacement (1) étant associé audit élément en forme de feuille.

23. Batterie au plomb et électrolyte gélifié, comprenant une pluralité de cellules électro-chimiques, chaque cellule comprenant une pluralité de paires électrochimiques portant deux électrodes de polarité inverse, au moins une desdites paires comportant un élément d' es-pacement selon l'une quelconque des revendica-tions 1 à 21.

24. Corps formant séparation pour accumulateurs acides au plomb, qui se place entre deux élec-trodes de polarités inverses d'une paire électrochimique, comprenant un élément en forme de feuille (4) en matière plastique et au moins un élément d'espacement (1, 10, 20) selon l'une quelconque des revendications 1 à 21, ledit élément d'espacement (1) étant associé audit élément en forme de feuille.

25. Accumulateur acides au plomb, comprenant une pluralité de cellules électrochimiques, chaque cellule comprenant une pluralité de paires électro-chimiques portant deux électrodes de polarités inverses, au moins une desdites paires comportant un élément d'espacement selon l'une quelconque des revendications 1 à 21.
